# EUROPÄISCHE PATENTSCHRIFT

(11) **EP 0 742 147 B1**
(45) Veröffentlichungstag und Bekanntmachung des Hinweises auf die Patenterteilung: **21.10.1998**
(21) Anmeldenummer: 96106163.7
(22) Anmeldetag: 19.04.1996
(51) Int. Cl.: B65B 3/32, B67C 3/20, G01F 11/02

(54) **Dosiervorrichtung**
Dosing device
Dispositif de dosage

(30) Priorität: 09.05.1995 DE 19516924
(43) Veröffentlichungstag der Anmeldung: 13.11.1996
(73) Patentinhaber: ROBERT BOSCH GMBH, 70442 Stuttgart (DE)
(72) Erfinder: Poglitsch, Erhard, Dipl.-Ing., 70734 Fellbach (DE); Haarer, Rolf, 73650 Winterbach (DE); Voegele, Guenther, Dipl.-Ing. (FH), 71101 Schoenaich (DE); Mueller, Peter, Dipl.-Ing. (FH), 73557 Mutlangen (DE); Balange, Juergen, Dipl.-Ing. (FH), 71332 Waiblingen (DE)

(56) Entgegenhaltungen:
- EP-A- 0 286 785
- DE-A- 2 824 942
- FR-A- 2 601 327

## Beschreibung

### Stand der Technik

Die Erfindung geht aus von einer Dosiervorrichtung nach dem Oberbegriff des Anspruchs 1. Bei einer derartigen, aus der EP 0 286 785 B1 bekannten Vorrichtung dieser Art sind an der Unterseite eines Produktbehälters mehrere Dosierer angeordnet. Die als Kolbendosierer ausgebildeten Dosierer haben jeweils einen Ventilzylinder, in dem ein beweglicher Ventilkolben angeordnet ist. Der Ventilzylinder ist von einem als Ringkolben ausgebildeten Dosierkolben umfaßt. Nachteilig dabei ist, daß durch den Ventilkolben der Durchflußquerschnitt des Ventilzylinders reduziert ist. Dadurch bauen die bekannten Dosierer für eine bestimmte Abfülleistung relativ groß. Dies hat zur Folge, daß beispielsweise mehrere verschiedene Produkte in einen Behälter, zum Beispiel einen Joghurtbecher, gleichzeitig nicht abgefüllt werden können, da die dazu notwendigen mehreren Dosierer einen größeren Gesamtquerschnitt aufweisen als der Öffnungsquerschnitt des Behälters.

### Vorteile der Erfindung

Die erfindungsgemäße Dosiervorrichtung zum Dosieren und Abfüllen von flüssigen oder pastösen Produkten mit den kennzeichnenden Merkmalen des Anspruchs 1 hat demgegenüber den Vorteil, daß die Dosierer besonders kompakt ausgebildet sind. Dadurch können mehrere Dosierer nebeneinander angeordnet werden, die einen Behälter gleichzeitig mit verschiedenen Produkten füllen. Dies hat zur Folge, daß eine besonders hohe Leistung der Vorrichtung bei geringem Platzbedarf erzielt werden kann.

Weitere Vorteile und vorteilhafte Weiterbildungen der erfindungsgemäßen Dosiervorrichtung ergeben sich aus den Unteransprüchen und der Beschreibung. Wird zwischen dem Ringkolben und dem Ventilrohr ein zusätzlicher Ventilzylinder angeordnet, so läßt sich ein insgesamt kompakterer Dosierer mit kurzem Ventilrohr verwirklichen. Besonders vorteilhaft ist es, wenn ein in sich geschlossener Sterilraum für die Antriebe der Dosierer vorgesehen ist, der durch die Entkopplung von den Produktbehältern und den Dosierern bsw. bei Wartungsarbeiten an den Dosierern oder einem Produktwechsel eine einfachere Handhabung der Vorrichtung ermöglicht.

### Zeichnung

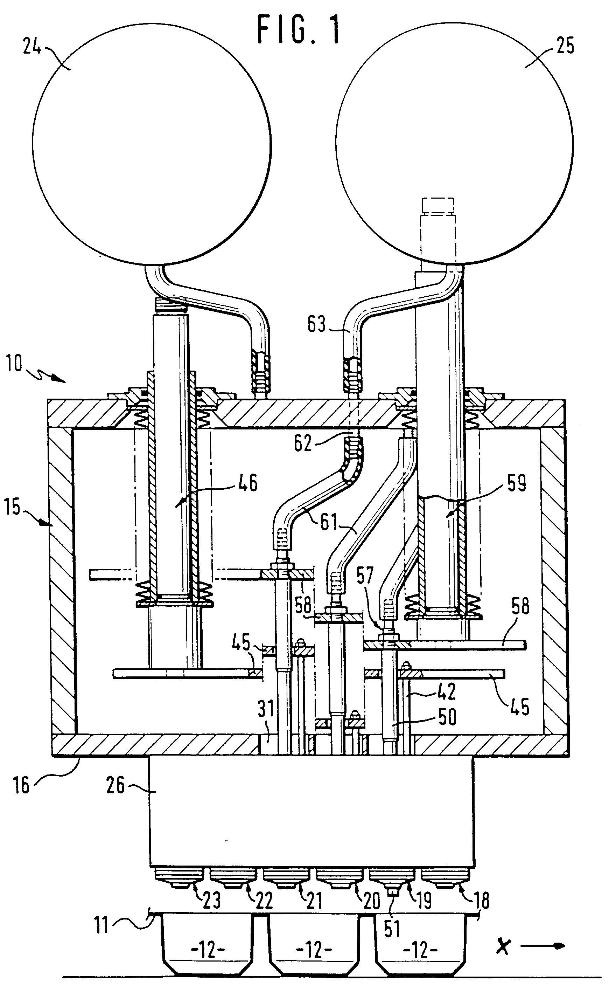

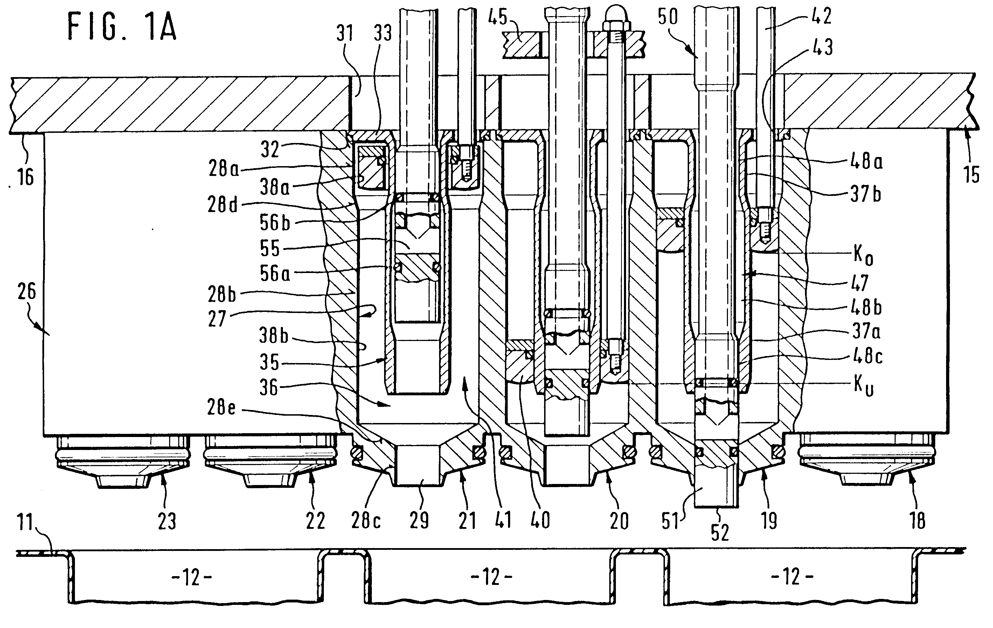

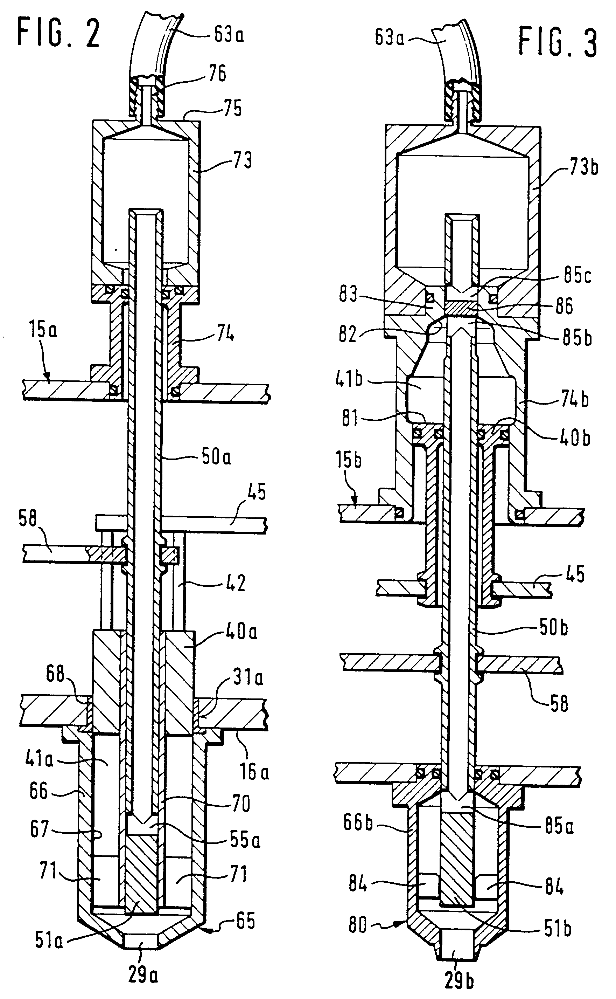

Drei Ausführungsbeispiele der Erfindung sind in der Zeichnung dargestellt und werden in der nachfolgenden Beschreibung näher erläutert. Es zeigen Figur 1 eine Dosiervorrichtung während veschiedener Betriebsphasen vereinfacht in Seitenansicht und teilweise im Längsschnitt, Figur 1a die Dosiereinrichtungen nach Figur 1 in Seitenansicht und teilweise im Längsschnitt, und die Figuren 2 und 3 einen Teil der Dosiervorrichtung nach Figur 1 in jeweils abgewandelter Form im Längsschnitt.

### Beschreibung der Ausführungsbeispiele

Die in den Figuren 1 und 1a dargestellte Dosiervorrichtung 10 zum Dosieren und Abfüllen von flüssigen oder pastösen Produkten ist Teil einer nicht näher dargestellten Produktionsanlage. In dieser werden in eine Folienbahn 11 aus thermoplastischem Material neben- und hintereinander Behälter 12, bsw. Yoghourtbecher, für das Produkt eingeformt. Die Folienbahn 11 wird anschließend taktweise in den Bereich der Vorrichtung 10 gefördert. Nach dem Abfüllen der Behälter 12 in der Vorrichtung 10 wird die Folienbahn 11 in Richtung X weitertransportiert, wo anschließend in bekannter Weise die Oberseite der Folienbahn 11 mit einer Deckfolie versiegelt, und danach einzelne oder jeweils mehrere Behälter 12 aus der Folienbahn 11 ausgetrennt werden.

Im Bereich der Vorrichtung 10 befindet sich oberhalb der Folienbahn 11 ein als Sterilraum ausgebildeter geschlossener Antriebskasten 15. An der Unterseite 16 des Antriebskastens 15 sind beispielsweise mehrere Reihen von jeweils sechs Dosiereinrichtungen 18 bis 23 angeordnet. In den Figuren 1 und 1a sind der Vereinfachung halber die Dosiereinrichtungen 19, 20, 21 während verschiedener Betriebsphasen der Vorrichtung 10 im Schnitt näher dargestellt. Während des eigentlichen Betriebs befinden sich die Dosiereinrichtungen 18 bis 23 selbstverständlich in der jeweils selben Position.

Im Ausführungsbeispiel sind jeweils zwei benachbarte Dosiereinrichtungen 18 bis 23 einem Behälter 12 zugeordnet, so daß je Fördertakt jeweils drei aufeinanderfolgende Reihen von Behältern 12 gleichzeitig befüllt werden. Jeweils eine der einem Behälter 12 zugeordneten Dosiereinrichtungen 18 bis 23 ist einem Produktbehälter 24, die jeweils andere Dosiereinrichtung 18 bis 23 einem Produktbehälter 25 zugeordnet, wobei die beiden Produktbehälter 24, 25 in der Zeichnung maßstäblich verkleinert dargestellt sind. Das bedeutet, daß jeder Behälter 12 gleichzeitig von zwei Produktbehältern 24, 25, vorzugsweise mit verschiedenem Inhalt befüllt wird.

Die Dosiereinrichtungen 18 bis 23 sind in einem gemeinsamen Gehäuse 26 zusammengefasst. Im Gehäuse 26 ist für jede der Dosiereinrichtungen 18 bis 23 eine Stufenbohrung 27 ausgebildet. Die Stufenbohrung 27 hat drei zylindrische Abschnitte 28a bis 28c, und dazwischen im jeweiligen Übergangsbereich zwei konische Abschnitte 28d, 28e. Der dem Antriebskasten 15 zugewandte Abschnitt 28a besitzt den größten Durchmesser, während der im Grund der Stufenbohrung 27 ausgebildete Abschnitt 28c mit dem kleinsten Durchmesser gleichzeitig als Auslaßbohrung 29 dient. Fluchtend mit der Stufenbohrung 27 ist in der Unterseite 16 des Trägerkastens 15 ein Loch 31 ausgebildet, das einen etwas größeren Durchmesser als der Durchmesser des Abschnitts 28a aufweist. In dem Abschnitt 28a ist ferner an der der Unterseite 16 zugewandten Stirnfläche eine umlaufende Schulter 32 ausgebildet, in der ein ringförmiger Flansch 33 eines Ventilzylinders 35 angeordnet ist. Durch den Flansch 33 hängt der Ventilzylinder 35, der bis in den Abschnitt 28b der Stufenbohrung 27 reicht, frei in der Stufenbohrung 27, so daß zwischen dem Grund der Stufenbohrung 27 und dem Ventilzylinder 35 ein ringförmiger Überströmbereich 36 entsteht.

Die Mantelfläche des Ventilzylinders 35 ist zylindrisch ausgebildet, mit einem unteren, der Auslaßbohrung 29 zugewandten Abschnitt 37a mit größerem Durchmesser und einem oberen Abschnitt 37b mit geringerem Durchmesser. Zwischen den Mantelflächen 38a, 38b der Stufenbohrung 27 und dem Abschnitt 37a des Ventilzylinders 35 ist ein Ringkolben 40 gleitend und dichtend geführt. Dadurch ist vom Ringraum zwischen der Stufenbohrung 27 und der Mantelfläche des Ventilzylinders 35, sowie der entsprechenden Stirnfläche des Ringkolbens 40 und dem Grund der Stufenbohrung 27 ein ringförmiger Dosierraum 41 ausgebildet.

Der Ringkolben 40 ist im Abfüllbetrieb der Vorrichtung 10 im Abschnitt 37a zwischen einem oberen Totpunkt K_{O} und einem unteren Totpunkt K_{U} beweglich. Dazu ist der Ringkolben 40 mit einer Kolbenstange 42 verbunden, die durch einen Durchbruch 43 im Flansch 33 geführt ist, und in den Antriebskasten 15 hineinragt. Dort ist die Kolbenstange 42 an einer ersten Trägerplatte 45 befestigt, die mittels wenigstens einer Säule 46 bsw. mit einem nicht dargestellten Kurvengetriebe oder einem Servomotor gekoppelt ist, wodurch die Kolbenstange 42 auf- und abbewegbar ist. Die Säule 46 durchdringt den Antriebskasten 15 an dessen Oberseite, wobei der Antriebskasten 15 an der Durchtrittsstelle abgedichtet ist.

Der Innenraum 47 des Ventilzylinders 35 weist drei Abschnitte 48a, 48b und 48c auf, wobei der mittlere Abschnitt 48b einen größeren Durchmesser aufweist als die beiden Endabschnitte 48a und 48c, die jeweils den selben Durchmesser haben. Im Ventilzylinder 35 ist ein auf- und abbewegbares Ventilrohr 50 geführt. Am unteren, der Auslaßbohrung 29 zugewandten Ende des Ventilrohrs 50 ist eine Ventilspitze 51 angesetzt. Knapp oberhalb der Ventilspitze 51 weist das Ventilrohr 50 eine Querbohrung 55 auf. Unterhalb und oberhalb der Querbohrung 55 ist in einer umlaufenden Ringnut jeweils ein Dichtring 56a, 56b angeordnet.

Das der Ventilspitze 51 abgewandte obere Ende 57 des Ventilrohrs 50 ist an einer zweiten Trägerplatte 58 befestigt, die mittels einer zweiten Säule 59 auf- und abbeweglich angeordnet ist. Der Stellzylinder 59 durchdringt ebenfalls den Antriebskasten 15 an dessen Oberseite.

Das obere Ende 57 des Ventilrohrs 50 ist mittels eines Schlauches 61 mit einem Zwischenstück 62 verbunden, das den Trägerkasten 15 an dessen Deckel durchdringt. Das Zwischenstück 62 ist wiederum mittels eines zweiten Schlauches 63 mit jeweils einem der Produktbehälter 24, 25 verbunden.

Die oben beschriebene Vorrichtung 10 funktioniert wie folgt: Zu Beginn der Ansaugphase befindet sich der Ringkolben 40 in seiner unteren Endlage Kᵤ, und das Ventilrohr 50 ist so weit abgesenkt, daß sich dessen Querbohrung 55 im Bereich des Überströmbereichs 36 befindet. Gleichzeitig dichten die beiden Dichtringe 56a, 56b die Auslaßbohrung 29 bzw. den unteren Endabschnitt 48c des Ventilzylinders 35 ab. Nun wird der Ringkolben 40 mittels des Stellzylinders 46 in seine obere Endlage Kₒ angehoben, so daß Produkt von dem jeweiligen Produktbehälter 24, 25 durch die Schläuche 61, 63 und das Zwischenstück 62 in das Ventilrohr 50 angesaugt wird, das wiederum durch die Querbohrung 55 in den Dosierraum 41 eintritt. Sobald der Ringkolben 40 seine obere Position Kₒ erreicht hat, ist die Ansaugphase abgeschlossen (siehe Dosiereinrichtung 19). Zum Ausstoßen des im Ventilzylinder 35 befindlichen Produkts wird das Ventilrohr 50 so weit nach oben verfahren, daß die Querbohrung 55 und der Dichtring 56a im Bereich des unteren Abschnitts 48c des Ventilzylinders 35 sind. Dadurch wird das Ventilrohr 50 zum Ventilzylinder 35 hin abgedichtet. Das Anheben des Ventilrohrs 50 erfolgt mindestens so weit, daß die Stirnfläche 52 der Ventilspitze 51 die Auslaßbohrung 29 freigibt. Nun wird der Ringkolben 40 mittels desr Säule 46 aus seiner oberen Lage Kₒ in die untere Ringkolbenlage Kᵤ abgesenkt. Dadurch wird das Produkt aus dem Dosierraum 41 durch die Auslaßbohrung 29 in den darunter bereitgestellten Behälter 12 abgegeben (siehe Dosiereinrichtung 20). Sobald sich der Ringkolben 40 in seiner unteren Endlage Kᵤ befindet, ist der Abfüllvorgang abgeschlossen, worauf das Ventilrohr 50 wieder in seine untere, die Auslaßbohrung 29 verschließende Lage verfahren wird. Anschließend wiederholen sich die Vorgänge wie oben beschrieben.

Vor Inbetriebnahme der Vorrichtung 10, nach einer längeren Produktionspause oder bei einem Produktwechsel ist es notwendig, die Vorrichtung 10 zu reinigen bzw. zu sterilisieren. Dazu werden, wie bei der Dosiereinrichtung 21 dargestellt, sowohl der Ringkolben 40, als auch das Ventilrohr 50 über die während des Abfüllbetriebs auftretenden oberen Endlagen angehoben. Das bedeutet, daß der Ringkolben 40 sich mit seitlichem Spiel innerhalb des oberen Abschnitts 28a der Stufenbohrung 27, und die Ventilspitze 51 und die Querbohrung 55 mit seitlichem Spiel im Bereich des Abschnitts 48b des Ventilrohrs 50 befinden. Wird nun Reinigungs- bzw. Sterilisiermittel in die Vorrichtung 10 eingeleitet, so kann sowohl der Ringkolben 40, als auch die Ventilspitze 51 besonders gut umspült werden, wodurch sich eine gute und einfache Reinigung bzw. Sterilisation erzielen läßt.

Bei den Ausführungsbeispielen nach den Figuren 2 und 3 sind die Dosiereinrichtungen derart modifiziert, daß auf die beim ersten Ausführungsbeispiel im Trägerkasten 15 vorhandenen Schläuche 61 verzichtet werden kann. Der Antrieb der einzelnen Dosiereinrichtungen erfolgt analog zum ersten Ausführungsbeispiel über Trägerplatten und Stellzylinder, so daß im Folgenden nur auf die zum ersten Ausführungsbeispiel wesentlichen Änderungen eingegangen wird. Weiterhin ist der Einfachheit halber in der Zeichnung jeweils nur eine Dosiereinheit dargestellt, die als Einzelelement an der Unterseite des Trägerkastens angeordnet ist. Bei mehreren Dosiereinrichtungen können diese jedoch wie beim ersten Ausführungsbeispiel in einem gemeinsamen Gehäuse zusammengefasst werden.

Bei der Dosiereinrichtung 65 nach der Figur 2 ist an der Unterseite des Trägerkastens 15a ein becherförmiges Dosiergehäuse 66 mit einer in dessen Grund ausgebildeten Auslaßbohrung 29a befestigt. An dessen inneren Mantelfläche 67 ist ein Ringkolben 40a gleitend geführt, der in seiner obersten Stellung in den Trägerkasten 15a hineinragt. Dazu ist in dem Loch 31a in der Unterseite 16a des Trägerkastens 15a eine Buchse 68 eingesetzt, die denselben Innendurchmesser wie die Mantelfläche 67 des Dosiergehäuses 66 aufweist, so daß die Buchse 68 bündig mit der Mantelfläche 67 abschließt. Der Ringkolben 40a umschließt an seinem Innendurchmesser ein Zwischenrohr 70, das mittels bsw. zwei um 180 Grad gegeneinander versetzt angeordneter Leitflächen 71 an dem der Auslaßbohrung 29a zugewandten Ende an der Mantelfläche 67 befestigt ist. Im Zwischenrohr 70 ist wiederum das Ventilrohr 50a geführt, das wie beim ersten Ausführungsbeispiel an seinem unteren Ende oberhalb der Ventilspitze 51a eine Querbohrung 55a aufweist. Das Ventilrohr 50a durchdringt den Trägerkasten 15a völlig, und ragt in einem auf der Oberseite des Trägerkastens 15a angeordneten Ansaugzylinder 73. Der Ansaugzylinder 73 ist auf ein Zwischenstück 74 dichtend aufgesetzt, das wiederum in eine entsprechende Aussparung in der Oberseite des Trägerkastens 15a eingelassen ist. Aus der oberen Stirnfläche 75 des Ansaugzylinders 73 ragt ein Anschlußstutzen 76, der mit dem Schlauch 63a verbunden ist.

Die Funktionsweise der Dosiereinrichtung 65 ist analog der Funktionsweise der Dosiereinrichtungen 18 bis 23 beim ersten Ausführungsbeispiel. Das bedeutet, daß zum Ansaugen von Produkt in das Dosiergehäuse 66 das Ventilrohr 50a soweit abgesenkt wird, daß die Ventilspitze 51a die Auslaßbohrung 29a abdichtet, und die Querbohrung 55a unterhalb des Zwischenrohrs 70 bzw. der Leitflächen 71 freigegeben wird. Nun wird bei einer Aufwärtsbewegung des Ringkolbens 40a Produkt durch den Schlauch 63a, den Ansaugzylinder 73, das Zwischenstück 74 und das Ventilrohr 50a durch die Querbohrung 55a in den Dosierraum 41a im Dosiergehäuse 66 eingeleitet. Zum Ausstoßen des Produkts wird das Ventilrohr 50a soweit in das Zwischenrohr 70 eingezogen, daß die Querbohrung 55a des Ventilrohrs 50a vom Zwischenrohr 70 abgedichtet wird, und gleichzeitig die Ventilspitze 51a die Auslaßbohrung 29a freigibt. Durch das sich anschließende Senken des Ringkolbens 40a wird das Produkt durch die Auslaßbohrung 29a in den Behälter 12 abgegeben.

Die Dosiereinrichtung 80 nach der Figur 3 unterscheidet sich vom Ausführungsbeispiel nach der Figur 2 im wesentlichen dadurch, daß die Anordnung von Ringkolben und Dosierraum oberhalb des Antriebskastens erfolgt. Dazu greift vom Antriebskasten 15b her der Ringkolben 40b in das auf der Oberseite des Antriebskastens 15b angeordnete Zwischenstück 74b. Somit wird der Dosierraum 41b gebildet von der Ringfläche zwischen der Innenwand des Zwischenstücks 74b und der Mantelfläche des Ventilrohrs 50b, sowie dem Boden 81 des Ringkolbens 40b und einer Unterseite 82 eines in den Ansaugzylinder 73b ragenden Fortsatzes 83 des Zwischenstücks 74b. Das Dosiergehäuse 66b weist an seiner Innenfläche bsw. zwei um 180 Grad zueinandner versetzt angeordnete Führungsbleche 84 für das Ventilrohr 50b auf, die sich im Bereich der Ventilspitze 51b befinden.

Im Gegensatz zu den beiden ersten Ausführungsbeispielen hat das Ventilrohr 50b drei Querbohrungen 85a, 85b, 85c. Die unterste Querbohrung 85a befindet sich oberhalb der Ventilspitze 51b im Bereich des Dosiergehäuses 66b. Die beiden anderen Querbohrungen 85b und 85c sind unter- und oberhalb eines das Ventilrohr 50b verschließenden Stopfens 86 im Bereich des Fortsatzes 83 im Zwischenstück 74b angeordnet. Die Lage der einzelnen Querbohrungen im Ventilrohr 50b ist derart, daß in einer angehobenen Position des Ventilrohrs 50b die Querbohrung 85c und der Stopfen 86 im Bereich des Fortsatzes 83 liegen, so daß der Ansaugzylinder 73b vom Zwischenstück 74b für das Produkt abgetrennt ist. Weiterhin befinden sich die Querbohrungen 85a und 85b freiliegend im Bereich des Dosierraums 41b bzw. des Zwischenstücks 74b. In der abgesenkten Position des Ventilrohrs 50b befinden sich dagegen beide Querbohrungen 85b, 85c freiliegend im Bereich des Dosierraums 41b, während die Querbohrung 85a frei im Dosiergehäuse 66b angeordnet ist.

Während der Ansaugphase, also während sich der Ringkolben 40b im Zwischenstück 74b nach unten bewegt, ist das Ventilrohr 50b in seiner abgesenkten Lage, bei der die Ventilspitze 51b die Auslaßbohrung 29b verschließt. Dadurch wird Produkt durch das Ventilrohr 50b über die Querbohrung 85c in den Dosierraum 41b eingeleitet. Dadurch, daß sich die Querbohrung 85b nahezu direkt unterhalb der Querbohrung 85c befindet, gelangt während der Ansaugphase kein Produkt über die Querbohrung 85b in das Ventilrohr 50b, sondern es sammelt sich ausschließlich im Dosierraum 41b im Zwischenstück 74b. Zum Abgeben des im Dosierraum 41b angesaugten Produkts wird das Ventilrohr 50b in seine angehobene Position gebracht. Dadurch wird, wie oben beschrieben, der Ansaugzylinder 73b vom Dosierraum 41b abgetrennt, und gleichzeitig gibt die Ventilspitze 51b die Auslaßbohrung 29b frei. Wird nun der Ringkolben 40b aus seiner unteren Endlage in dessen obere Endlage verfahren, so wird das im Dosierraum 41b befindliche Produkt über die Querbohrung 85b in das Ventilrohr 50b abgegeben. Das Produkt verläßt danach das Ventilrohr 50b über die Querbohrung 85a in das Dosiergehäuse 66b, von wo aus es durch die Auslaßbohrung 29b in den bereitgestellten Behälter 12 abgegeben wird.

Beim Ausführungsbeispiel gemäß der Figur 3 ergibt sich gegenüber dem Ausführungsbeispiel der Figur 2 der Vorteil einer besseren Entlüftung des Dosierraums 41b, da für im Dosierraum 41b eingeschlossene Luft im Ventilrohr 50b zwischen dem Dosierraum 41b und dem Ansaugzylinder 73b nur eine geringe Distanz zu überwinden ist.

## Patentansprüche

1. Dosiervorrichtung (10) zum Dosieren und Abfüllen von flüssigen oder pastösen Produkten, mit wenigstens einem Produktbehälter (24, 25) und wenigstens einem einen Ringkolben (40, 40a, 40b) aufweisenden Kolbendosierer (18 bis 23, 65, 80), dadurch gekennzeichnet, daß koaxial zum Ringkolben (40, 40a, 40b) ein auf- und abbewegliches Ventilrohr (50, 50a, 50b), das mit dem wenigstens einen Produktbehälter in Verbindung steht, angeordnet ist, daß der Ringkolben (40, 40a, 40b) das Ventilrohr (50, 50a, 50b) umgibt, daß das Ventilrohr (50, 50a, 50b) wenigstens eine quer zu dessen Verschieberichtung ausgebildete Öffnung (55, 55a, 85a, 85b, 85c) hat, die in Abhängigkeit von der Stellung des Ventilrohrs (50, 50a, 50b) einen Durchflußquerschnitt für das Produkt zum Kolbendosierer freigibt, und daß der wenigstens eine Kolbendosierer (18 bis 23, 65, 80) von dem wenigstens einen Produktbehälter (24, 25) räumlich getrennt angeordnet ist.

2. Vorrichtung nach Anspruch 1, dadurch gekennzeichnet, daß der Ringkolben (40, 40a) einen Ventilzylinder (35, 70) an dessen Außenumfang dichtend umschließt, und daß das Ventilrohr (50, 50a) innerhalb des Ventilzylinders (35, 70) geführt ist, so daß der Ventilzylinder (35, 70) in Abhängigkeit von der Stellung des Ventilrohrs (50, 50a) dessen Queröffnung (55, 55a) abdichtet.

3. Vorrichtung nach Anspruch 1 oder 2, dadurch gekennzeichnet, daß jeweils mindestens zwei Kolbendosierer (18 bis 23, 65, 80) einem gemeinsamen zufüllenden Behälter (12) zugeordnet sind, wobei die Kolbendosierer (18 bis 23, 65, 80) mit unterschiedlichen Produktbehältern (24, 25) verbunden sind.

4. Vorrichtung nach einem der Ansprüche 1 bis 3, dadurch gekennzeichnet, daß die Kolbendosierer (18 bis 23) innerhalb eines gemeinsamen Gehäuses (26) angeordnet sind.

5. Vorrichtung nach einem der Ansprüche 1 bis 4, dadurch gekennzeichnet, daß Mittel (42, 45, 46, 58, 59) zum Bewegen des Ringkolbens (40, 40a, 40b) und des Ventilrohrs (50, 50a, 50b) vorgesehen sind, die im wesentlichen innerhalb eines geschlossenen Sterilraums (15, 15a, 15b) angeordnet sind.

6. Vorrichtung nach Anspruch 5, dadurch gekennzeichnet, daß mit dem Sterilraum (15, 15a, 15b) mittels eines Zwischenelements (74, 74b) ein mit dem Produktbehälter (24, 25) verbundener Ansaugzylinder (73, 73b) gekoppelt ist, in den das Ventilrohr (50a, 50b) teilweise hineinragt.

## Claims

1. Dosing device (10) for dosing and dispensing liquid or pasty products, having at least one product container (24, 25) and at least one piston-type dosing means (18 to 23, 65, 80) having an annular piston (40, 40a, 40b), characterized in that a valve tube (50, 50a, 50b) which can be moved up and down and is in connection with at least one product container is arranged coaxially with respect to the annular piston (40, 40a, 40b), in that the annular piston (40, 40a, 40b) surrounds the valve tube (50, 50a, 50b), in that the valve tube (50, 50a, 50b) has at least one opening (55, 55a, 85a, 85b, 85c) which is formed transversely with respect to its direction of displacement and, dependent on the position of the valve tube (50, 50a, 50b), releases a through-flow cross-section for the product to the piston-type dosing means, and in that the least one piston-type dosing means (18 to 23, 65, 80) is arranged spatially separate from the at least one product container (24, 25).

2. Device according to Claim 1, characterized in that the annular piston (40, 40a) encloses a valve cylinder (35, 70) in a sealing manner around the outer circumference of the latter, and in that the valve tube (50, 50a) is guided inside the valve cylinder (35, 70), with the result that, dependent on the position of the valve tube (50, 50a), the valve cylinder (35, 70) seals the transverse opening (55, 55a) of the latter.

3. Device according to Claim 1 or 2, characterized in that in each case at least two piston-type dosing means (18 to 23, 65, 80) are assigned to a common container (12) to be filled, the piston-type dosing means (18 to 23, 65, 80) being connected to different product containers (24, 25).

4. Device according to one of Claims 1 to 3, characterized in that the piston-type dosing means (18 to 23) are arranged inside a common housing (26).

5. Device according to one of Claims 1 to 4, characterized in that means (42, 45, 46, 58, 59) for moving the annular piston (40, 40a, 40b) and the valve tube (50, 50a, 50b), which are arranged substantially inside a closed sterile space (15, 15a, 15b), are provided.

6. Device according to Claim 5,characterized in that a suction-intake cylinder (73, 73b), which is connected to the product container (24, 25) and into which the valve tube (50a, 50b) partially protrudes, is coupled to the sterile space (15, 15a, 15b) by means of an intermediate element (74, 74b).

## Revendications

1. Dispositif de dosage (10) pour doser et conditionner des produits liquides ou pâteux comprenant au moins un réservoir à produit (24, 25) et au moins un doseur à piston (18-23, 65, 80) ayant un piston annulaire (40, 40a, 40b),
caractérisé en ce que
• coaxialement au piston annulaire (40, 40a, 40b), un tube de soupape (50, 50a, 50b) mobile en montée et descente, communique avec au moins un réservoir à produit,
• le piston annulaire (40, 40a, 40b) entoure le tube de soupape (50, 50a, 50b),
• le tube de soupape (50, 50a, 50b) comporte au moins une ouverture (55, 55a, 85a, 85b, 85c) réalisée transversalement à sa direction de coulissement, et qui, suivant la position du tube de soupape (50, 50a, 50b), libère une section de passage pour le produit vers le doseur à piston et,
• au moins un doseur à piston (18-23, 65, 80) est séparé dans l'espace par rapport à au moins un réservoir à produit (24, 25).

2. Dispositif selon la revendication 1,
caractérisé en ce que
• le piston annulaire (40, 40a) entoure de manière étanche la périphérie extérieure d'un cylindre de soupape (35, 70) et,
• le tube de soupape (50, 50a) est guidé à l'intérieur du cylindre de soupape (35, 70) pour que le cylindre (35, 70) assure l'étanchéité de l'orifice traversant (55, 55a) du tube de soupape (50, 50a) en fonction de la position de ce tube.

3. Dispositif selon la revendication 1 ou 2,
caractérisé en ce que
chaque fois au moins deux doseurs à piston (18-23, 65, 80) sont associés à un même réceptacle (12) à remplir, les doseurs à piston (18-23, 65, 80) étant reliés à des réservoirs de produits différents (24, 25).

4. Dispositif selon l'une des revendications 1 à 3,
caractérisé en ce que
les doseurs à piston (18-23) sont placés dans un boîtier commun (26).

5. Dispositif selon l'une des revendications 1 à 4,
caractérisé par
des moyens (42, 45, 46, 58, 59) pour déplacer le piston annulaire (40, 40a, 40b) et le tube de soupape (50, 50a, 50b) qui se trouvent principalement à l'intérieur d'une chambre stérile fermée (15, 15a, 15b).

6. Dispositif selon la revendication 5
caractérisé en ce qu'
un cylindre d'aspiration (73, 73b) relié au réservoir à produit (24, 25) est couplé à la chambre stérile (15, 15a, 15b) par un élément intermédiaire (74, 74b), le tube de soupape (50a, 50b) pénétrant partiellement dans ce cylindre d'aspiration.
